# EUROPEAN PATENT APPLICATION

(11) **EP 4 712 209 A1**
(43) Date of publication of application: **18.03.2026**
(21) Application number: 25758445.8
(22) Date of filing: 19.02.2025
(51) Int. Cl.: H01M 10/6551, H01M 10/613, H01M 50/204, H01M 50/249

(54) **BATTERY PACK COMPRISING THERMAL RESIN**

(30) Priority: 22.02.2024 KR 20240026080
(71) Applicant: LG Energy Solution, Ltd., Seoul 07335 (KR)
(72) Inventor: SON, Hong Se, Daejeon 34122 (KR)
(74) Representative: Plasseraud IP
(86) International application number: PCT/KR2025/002379
(87) International publication number: WO 2025/178362

(57) **Abstract**

Provided is a battery pack including: a battery module comprising a module frame; a pack frame having a bottom plate where the battery module is placed; and a thermally conductive resin interposed between a bottom plate of the battery module and the bottom plate of the pack frame, wherein a hole-shaped or groove-shaped receptor is provided in the bottom plate of the module frame, and the thermally conductive resin comprises an extension extending in upward direction and filling the anchor.

## Description

### [TECHNICAL FIELD]

This application claims the benefit of priority based on Korean Patent Application No. 10-2024-0026080 filed on February 22, 2024, entire content disclosed in the document of the patent applications is included as a part of this specification.

The present invention relates to a structure of a battery pack including a thermally conductive resin. More specifically, the present invention relates to a structure of a battery pack having improved bonding strength and thermal conductivity between a module frame and a thermally conductive resin provided between a battery module and a pack frame.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module in which multiple battery cells are electrically connected is used. Additionally, a plurality of such battery modules may be integrated to constitute a battery pack with higher output and larger capacity.

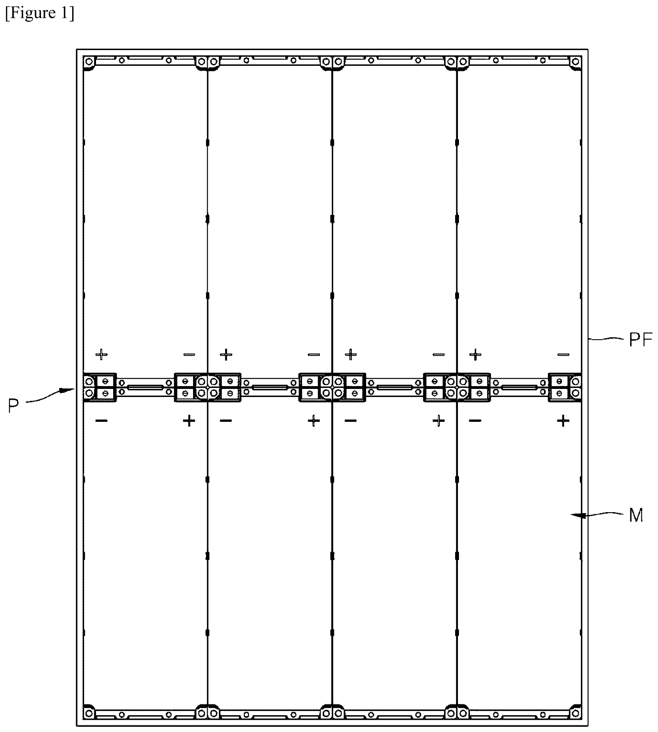

FIG. 1 illustrates a battery pack. Referring to FIG. 1, a battery pack P includes a plurality of battery modules M and a pack frame PF accommodating the plurality of battery modules M. The battery modules M are electrically connected to each other to form a single high-capacity, high-voltage battery.

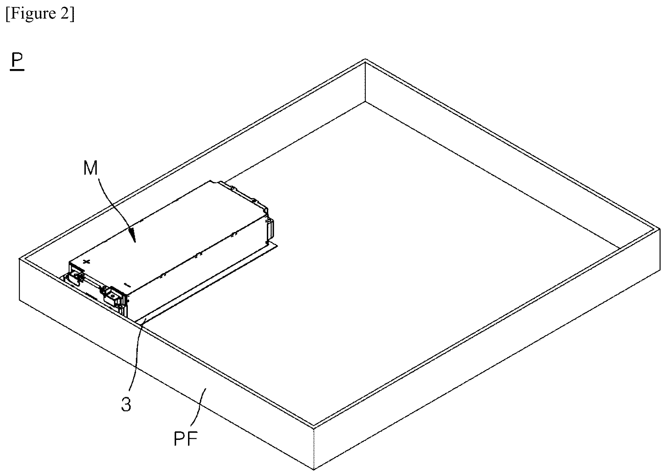

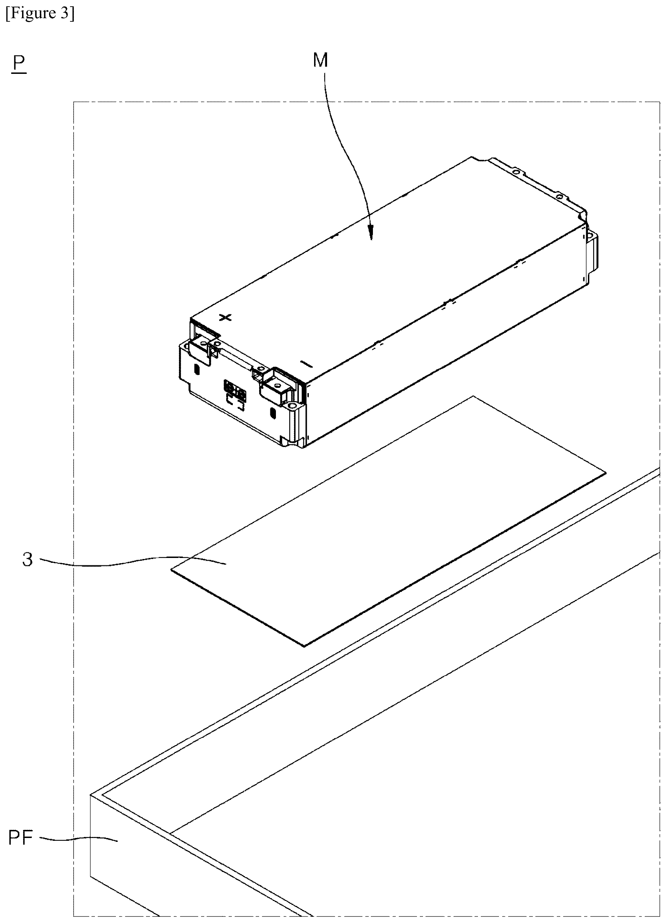

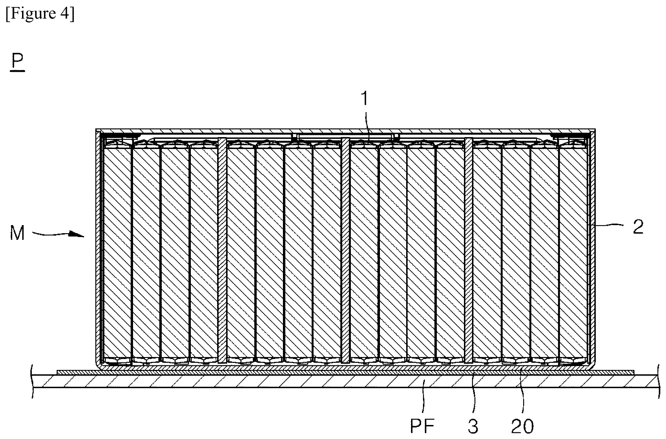

FIGS. 2 and 3 illustrate a battery module placed on a pack frame along with a thermally conductive resin, and FIG. 4 illustrates a cross-section of the battery pack of FIG. 2. Referring to FIGS. 2 to 4, a thermally conductive resin 3 is interposed between the battery module M and the pack frame PF.

Secondary batteries generate heat during charge and discharge, and change in temperature, especially high-temperature heat, greatly reduces the efficiency of the battery. The thermally conductive resin 3 conducts the heat from the battery module M to the pack frame PF to dissipate heat. However, as batteries become increasingly high-capacity and high-voltage, the amount of heat generated also increases, and it is problematic that the heat dissipation efficiency of such heat dissipation structure using the thermally conductive resin is not high.

Meanwhile, the thermally conductive resin 3 also plays a role in adhesively fixing the battery module M to the pack frame PF. However, this type of fixation is very vulnerable to loads that cause slipping due to the fixation solely relying on the adhesive strength between the module frame 20 and the pack frame PF and the thermally conductive resin 3.

### [DISCLOSURE]

### [TECHNICAL PROBLEM]

In order to solve above-described problems of prior art, it is an object of the present invention to provide a structure of a battery pack in which heat generated from a battery module may be dissipated to the outside through a pack frame.

In addition, it is an object of the present invention to provide a structure of a battery pack in which the bonding force between the thermally conductive resin and the module frame is strengthened such that the mechanical fixation between the module frame and the thermally conductive resin and/or the thermal connection between the battery module and the pack frame may be firmly maintained.

Specifically, it is an object of the present invention to provide a structure of a battery pack in which the detachment of the thermally conductive resin from the module frame in horizontal direction and/or vertical direction is prevented.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the problem, the present invention provides a structure of a battery pack including: a battery module including a module frame; a pack frame having a bottom plate where the battery module may be placed; and a thermally conductive resin interposed between a bottom plate of the battery module and the bottom plate of the pack frame, wherein a hole-shaped anchor is provided in the bottom plate of the module frame, and the thermally conductive resin includes an extension extending in upward direction and filling the anchor.

According to the present invention, since the extension interferes with the anchor in horizontal direction, the thermally conductive resin may resist a shear load generated between the bottom plate of the module frame and the thermally conductive resin, and the thermally conductive resin may be prevented from being detached from the pack frame in horizontal direction.

In addition, according to the present invention, the contact area between the thermally conductive resin and the module housing may be larger such that the speed at which heat is conducted from the thermally conductive resin to the pack frame is high.

Preferably, the anchors may be arranged in grid of three rows or more and three columns or more. In addition, the rows and columns of the anchors may be arranged at equal intervals. Accordingly, the anchors may evenly share the shear stress, and heat dissipation may occur evenly through the thermally conductive resin.

The anchor may include: a first portion having a first width along horizontal direction; and a second portion disposed under the first portion and having a second width greater than the first width along horizontal direction. That is, the anchor may include a first portion and a second portion disposed under the first portion, and the shape of the cross-section of the first portion may not completely encompass the shape of the cross-section of the second portion. As a result, the extension may interfere from above between the first portion and the second portion, and may prevent the thermally conductive resin from being detached from the module frame in downward direction.

For example, the anchor may include: a first portion of a circular cross-section having a first diameter; and a second portion of a circular cross-section disposed under the first portion and having a second diameter greater than the first diameter.

According to a first embodiment of the present invention, the first portion may have a rectangular cross-section of predetermined width and length and extending in first horizontal direction, and the second portion may have a rectangular cross-section of predetermined width and length and extending in second horizontal direction intersecting the first horizontal direction.

The anchor may include a tapered portion having a cross-section narrowing toward downward direction. The tapered portion may interfere with the extension from below to prevent the thermally conductive resin from separating from the module frame in downward direction.

For example, the tapered portion may have a circular cross-section having a diameter decreasing toward downward direction.

According to a second embodiment of the present invention, the tapered portion of the anchor has truncated cone shape with a diameter of an inner circumferential surface thereof decreasing toward downward direction.

The thermally conductive resin may include: an upper resin layer disposed on the bottom plate of the module frame; and a lower resin layer disposed under the bottom plate of the module frame. Here, the extension may connect the upper resin layer and the lower resin layer to each other through the anchor. The lower resin layer may interfere with the lower surface of the bottom plate of the module frame from below so as to prevent the entire thermally conductive resin from being detached from the bottom plate of the module frame in downward ward direction. In addition, the thermally conductive resin connects the upper and lower surfaces of the bottom plate of the module frame such that heat generated from the battery cell mounted in the module frame may be more effectively dissipated to the outside of the module frame.

The present invention also provides a structure of a battery pack including: a battery module including a module frame; a pack frame having a bottom plate where the battery module may be placed; and a thermally conductive resin interposed between a bottom plate of the battery module and the bottom plate of the pack frame, wherein a groove-shaped anchor is provided in the bottom plate of the module frame, and the thermally conductive resin includes an extension extending in upward direction and filling the anchor.

According to the present invention, since the extension interferes with the anchor in a horizontal direction, the thermally conductive resin may resist a shear load that is present between the bottom plates of the module frame and the pack frame, and the thermally conductive resin may be prevented from being detached from the module frame in the horizontal direction.

In addition, according to the present invention, since the contact area between the thermally conductive resin and the module frame increases, the speed at which heat is conducted from the thermally conductive resin to the pack frame is fast.

Preferably, the anchor may be provided in a plurality of juxtaposed rows extending side by side. In addition, the plurality of rows of the anchor may be arranged at equal intervals. Accordingly, each anchor may evenly share the shear stress, and heat dissipation through the thermally conductive resin may occur evenly.

The anchor may include: a first portion having a first width along horizontal direction; and a second portion disposed under the first portion and having a second width greater than the first width along horizontal direction. That is, the anchor may include a first portion and a second portion disposed above the first portion, and the shape of the cross-section of the first portion may not completely encompass the shape of the cross-section of the second portion. As a result, the extension may interfere from below between the first portion and the second portion, and may prevent the thermally conductive resin from being detached from the bottom plate in downward direction.

For example, the anchor may include: a first portion having a rectangular cross-section of a first width and extending in lengthwise direction; and a second portion disposed under the first portion and having a rectangular cross-section of a second width greater than the first width and extending in horizontal direction.

Alternatively, the anchor may include a tapered portion having a cross-section narrowing along downward direction. The tapered portion may interfere with the extension from below to prevent the thermally conductive resin from separating from the bottom plate of the module frame in upward direction.

For example, the anchor may include a tapered portion having a rectangular cross-section narrowing toward downward direction.

According to a third embodiment of the present invention, the anchor may include a tapered portion extending in lengthwise direction and having a trapezoidal cross-section with a lower width and an upper width thereof larger than the lower width in lengthwise direction.

The present invention also provides a structure of a vehicle including the battery pack. The battery pack may be built into the vehicle as a power source. The vehicle may be an electric vehicle or a hybrid vehicle. The vehicle may be a two-wheeled vehicle or a four-wheeled vehicle. However, the structure of the vehicle is not limited thereto, and the battery pack does not necessarily have to serve as a power source of the vehicle.

### [ADVANTAGEOUS EFFECTS]

The present invention may provide a structure of a battery pack wherein a battery module and a pack frame are thermally connected via a thermally conductive resin to dissipate heat generated from the battery module to the outside of the pack frame.

In addition, the present invention provides a structure of a battery pack wherein the bonding force between a thermally conductive resin and a module frame is strengthened such that the mechanical fixation between the module frame and the thermally conductive resin and the thermal connection between the battery module and the pack frame are firmly maintained.

Specifically, the present invention may provide a structure of a battery pack wherein the horizontal detachment of the thermally conductive resin from the module frame is prevented by the interference between the anchor and the extension of the thermally conductive resin extending downward, and wherein the vertical detachment of the thermally conductive resin from the module frame is prevented by the shape of the cross-section of the anchor.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIG. 1 illustrates a battery pack.
FIGS. 2 and 3 illustrate a battery module placed on a pack frame along with a thermally conductive resin.
FIG. 4 illustrates a cross-section of the battery pack of FIG. 2.
FIG. 5 illustrates a battery pack according to an embodiment of the present invention.
FIG. 6 illustrates a battery module placed on a pack frame according to an embodiment of the present invention.
FIG. 7 illustrates a battery module placed on a pack frame along with a thermally conductive resin according to a first embodiment of the present invention.
FIGS. 8 and 9 illustrate a module frame and a thermally conductive resin layer according to the first embodiment of the present invention.
FIGS. 10 and 11 illustrate a cross-section and a main part thereof of a battery pack, respectively, according to the first embodiment of the present invention.
FIG. 12 illustrates a battery module placed on a pack frame along with a thermally conductive resin according to a second embodiment of the present invention.
FIGS. 13 and 14 illustrate a module frame and a thermally conductive resin layer according to the second embodiment of the present invention.
FIGS. 15 and 16 illustrate a cross-section and a main part thereof of a battery pack, respectively, according to the second embodiment of the present invention.
FIG. 17 illustrates a battery module according to a third embodiment of the present invention placed on a pack frame along with a thermally conductive resin.
FIGS. 18 and 19 illustrate a module frame and a thermally conductive resin layer according to the third embodiment of the present invention.
FIGS. 20 and 21 illustrate a cross-section and a main part thereof of a battery pack, respectively, according to the third embodiment of the present invention.
FIG. 22 illustrates a vehicle according to an embodiment of the present invention.

### [DESCRIPTION OF REFERENCE NUMERALS]

1: battery cell
2: module frame
   20: bottom plate
   200: anchor
   201: first portion
   202: second portion
   203: tapered portion
3: thermally conductive resin
   30: extension
   31: upper resin layer
   32: lower resin layer
M: battery module
P: battery pack
   PF: pack frame
V: vehicle
D1: first width (first diameter)
D2: second width (second diameter)

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

The present invention relates to a structure of a battery pack including a battery module and a pack frame accommodating the same, wherein the battery pack includes a thermally conductive resin that mechanically and thermally connects the battery module to the pack frame, and the thermally conductive resin is prevented from being detached from the module frame and is in contact with the module frame over a large area.

Hereinafter, preferred embodiments of the present invention will be described with reference to the accompanying drawings.

### [OVERALL STRUCTURE OF THE BATTERY PACK]

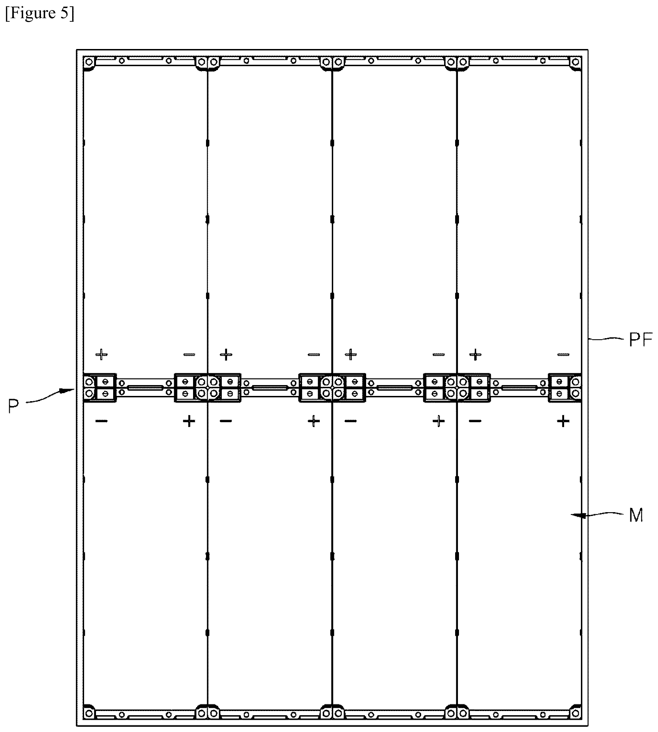

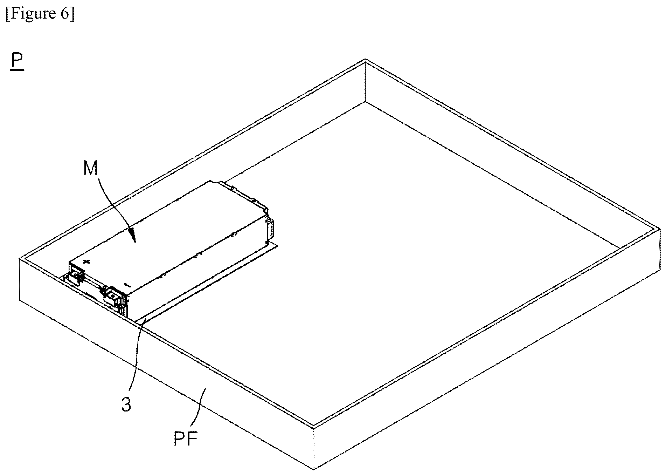

Hereinafter, with reference to FIGS. 5 and 6, the overall structure of a battery pack according to an embodiment of the present invention will be described.

FIG. 5 illustrates a battery pack according to an embodiment of the present invention. Referring to FIG. 5, a battery pack P according to an embodiment of the present invention may include a plurality of battery modules M and a pack frame PF where the plurality of battery modules M are mounted.

The battery module may have a module frame constituting the exterior thereof. The module frame may include a material having high thermal conductivity and strength such as metal. For example, the module frame according to an embodiment of the present invention may have a box shape manufactured by folding and/or welding aluminum plates. However, it is sufficient as long as the module frame has a flat lower surface so as to be placed on the bottom plate of the pack frame PF, and the shape and material thereof are not specifically limited.

The battery module M according to an embodiment of the present invention may include a plurality of battery cells built into the module frame, but is not limited thereto and may be a unit secondary battery of various shapes and structures.

Each battery module M may have anode and cathode terminals exposed to the outside of the module frame. The terminals of the battery modules M may be electrically connected in parallel and/or in series with each other. In order to achieve this, the battery pack may have a conductive bus bar connected to the terminals. Accordingly, the battery pack may be manufactured to have a high voltage and/or a high capacity.

The pack frame PF according to an embodiment of the present invention may include a material having high thermal conductivity and strength such as metal. For example, the pack frame PF according to an embodiment of the present invention may have a box shape manufactured by bending and/or welding aluminum plates. However, it is sufficient as long as the pack frame PF has a flat bottom surface for the battery module M to be placed thereon, and the shape and material thereof are not specifically limited.

The battery module M, specifically, one or more battery cells embedded in the battery module M, may release heat during charge and discharge or during thermal runaway caused by a short circuit. The battery pack may be manufactured in a manner that such heat is conducted to the pack frame PF through the module frame and dissipated to the outside.

FIG. 6 illustrates a battery module placed on a pack frame according to an embodiment of the present invention. Referring to FIG. 6, the battery pack P may include a thermally conductive resin 3 interposed between the frame of the battery module M and the pack frame PF. Specifically, the thermally conductive resin 3 may be interposed between the lower surface of the module frame 2 and the bottom surface of the pack frame PF.

The thermally conductive resin 3 may include a synthetic resin having high thermal conductivity. In addition, the battery module M and the pack frame PF may be adhesively fixed to each other by the thermally conductive resin 3 applied to the bottom surface of the pack frame PF by being cured after the battery module M is placed. Accordingly, the thermally conductive resin 3 may structurally and thermally connect the battery module M to the pack frame PF.

### [FIRST EMBODIMENT]

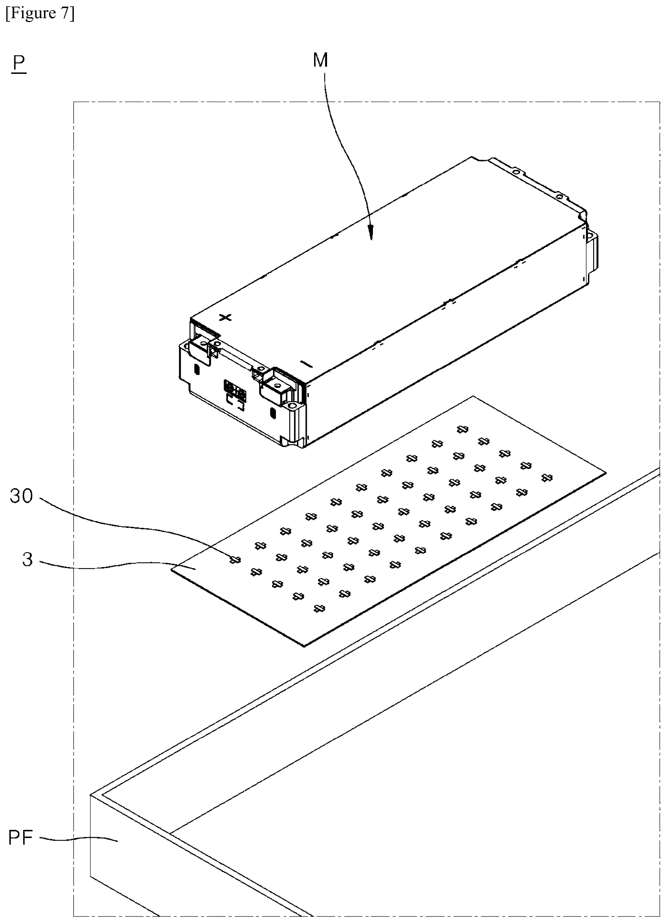

Hereinafter, with reference to FIGS. 7 to 11, the shape and bonding structure of the module frame and the thermally conductive resin according to a first embodiment of the present invention will be described in detail.

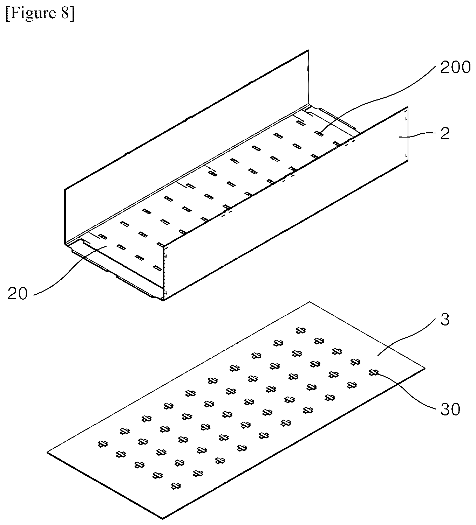

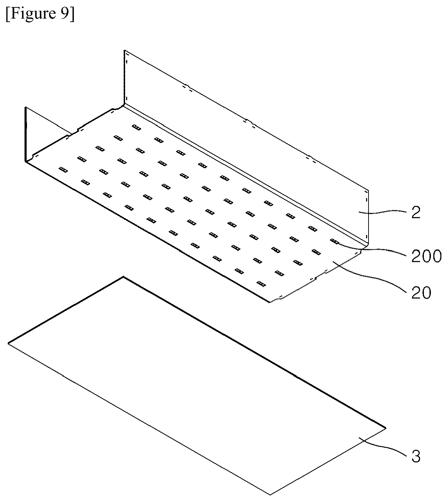

FIG. 7 illustrates a battery module placed on a pack frame along with a thermally conductive resin according to a first embodiment of the present invention, and FIGS. 8 and 9 illustrate a module frame and a thermally conductive resin layer according to the first embodiment of the present invention. Referring to FIGS. 7 to 9, the module frame 2 may include a bottom plate 20 with the thermally conductive resin 3 placed thereon.

The bottom plate 20 may be provided with a hole-shaped anchor 200 extending in upward direction from the lower surface thereof.

When the battery module M is placed on the thermally conductive resin 3 before curing and the thermally conductive resin 3 is cured after flowing into the anchor 200, the thermally conductive resin 3 forms an extension 30 having a shape of a protrusion extending in the upward direction.

Here, since the anchor 200 and the extension 30 overlap each other in the horizontal direction, the thermally conductive resin 3 and the module frame 2 may be shear-connected to each other in the horizontal direction. That is, interference in the horizontal direction between the anchor 200 and the extension 30 may limit the movement of the module frame 2 with respect to the thermally conductive resin 3, and the module frame 2 and the thermally conductive resin 3 may be structurally and mechanically fixed to each other as well as by adhesive force. Accordingly, the battery module M may be more firmly fixed to the thermally conductive resin 3 and the bottom surface of the pack frame PF on which the thermally conductive resin 3 is applied.

In addition, since the anchor 200 and the extension 30 are in contact with each other in the horizontal direction, the contact area between the module frame 2 and the thermally conductive resin 3 may increase. That is, compared to the module frame 2 having a flat lower surface, the lower surface of the module frame 2 having the anchor 200 has a large surface area, and as the thermally conductive resin 3 is partially introduced into the anchor 200 and cured, the contact area between the module frame 2 and the thermally conductive resin 3 may increase. Accordingly, the area through which heat may be conducted from the module frame 2 to the thermally conductive resin 3 increases such that the heat of the battery module M may be conducted more quickly to the thermally conductive resin 3 and the pack frame PF and dissipated.

It is preferable that a plurality of anchors 200 are provided. Accordingly, a plurality of extensions 30 may also be provided, and the plurality of extensions 30 may share the shear stress from the module frame 2.

For example, the anchor 200 may be arranged in a grid of 3 rows and 3 columns or more. Here, it is preferable that the rows and columns of the anchor 200 are arranged at equal intervals. Accordingly, each anchor 200 and each extension 30 may equally distribute stress, and the heat generated from the battery module M may be evenly dissipated to all areas.

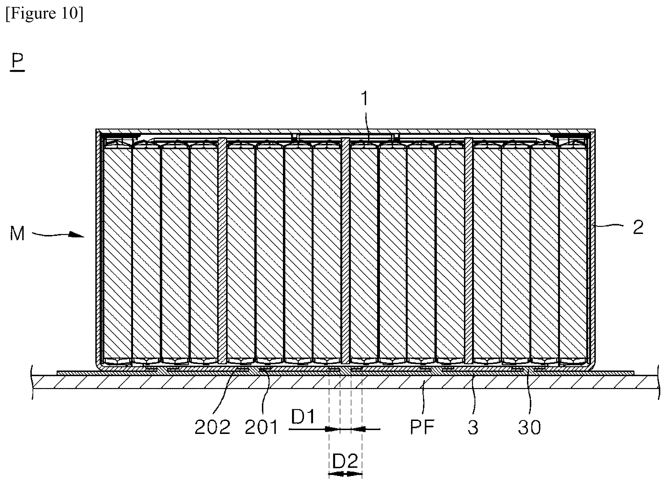

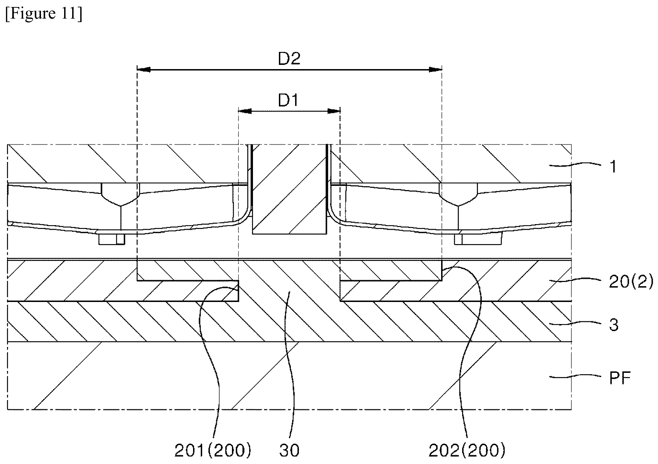

FIGS. 10 and 11 illustrate a cross-section and a main part thereof of a battery pack, respectively, according to the first embodiment of the present invention. Referring to FIGS. 10 and 11, the anchor 200 may include a first portion 201 having a predetermined first width D1 along a first horizontal direction, and a second portion 202 disposed above the first portion 201 and having a predetermined second width D2 larger than the first width D1 along the first horizontal direction.

That is, the anchor 200 may include the first portion 201 and the second portion 202 disposed above the first portion 201, and the cross-sectional shape of the first portion 201 may not completely encompass the cross-sectional shape of the second portion 202 in the plane. Accordingly, the extension 30 may interfere from below between the first portion 201 and the second portion 202, and may prevent the thermally conductive resin 3 from being detached in downward direction from the module frame.

According to the first embodiment of the present invention, the first portion 201 may have a rectangular cross-section of predetermined width and length and extending in first horizontal direction, and the second portion 202 may have a rectangular cross-section of predetermined width and length and extending in second horizontal direction intersecting the first horizontal direction.

In one modified example, the anchor 200 may include: a first portion 201 of a circular cross-section having a first diameter; and a second portion 202 of a circular cross-section disposed under the first portion 201 and having a second diameter greater than the first diameter.

### [SECOND EMBODIMENT]

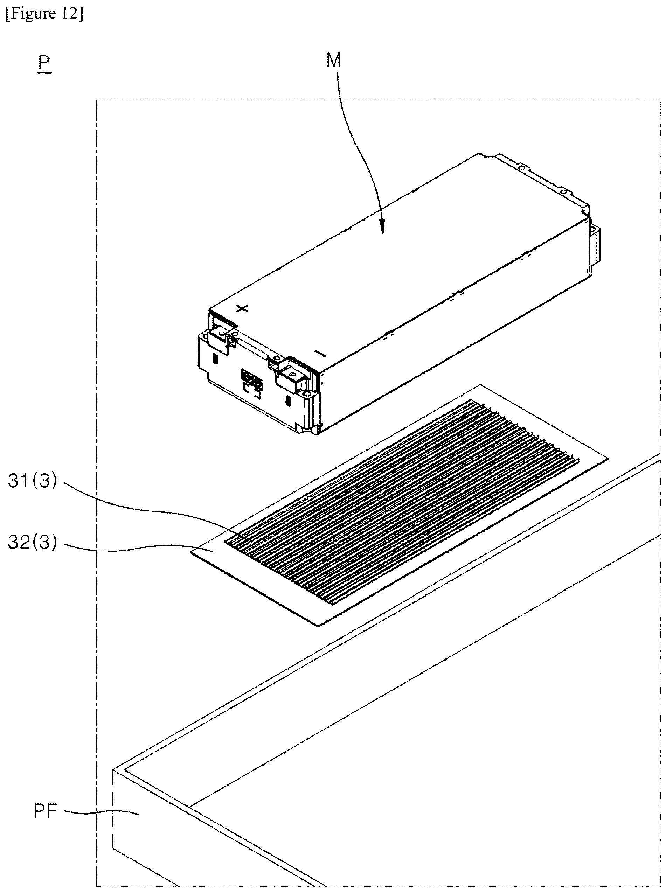

Hereinafter, with reference to FIGS. 12 to 16, the shape and bonding structure of the module frame and the thermally conductive resin according to a second embodiment of the present invention will be described in detail.

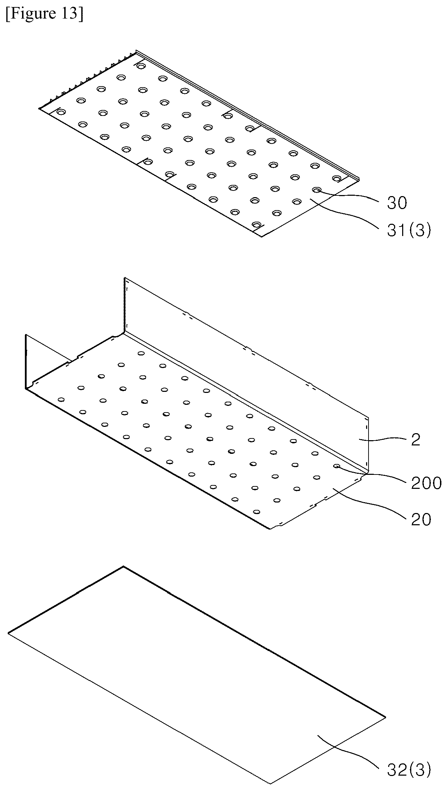

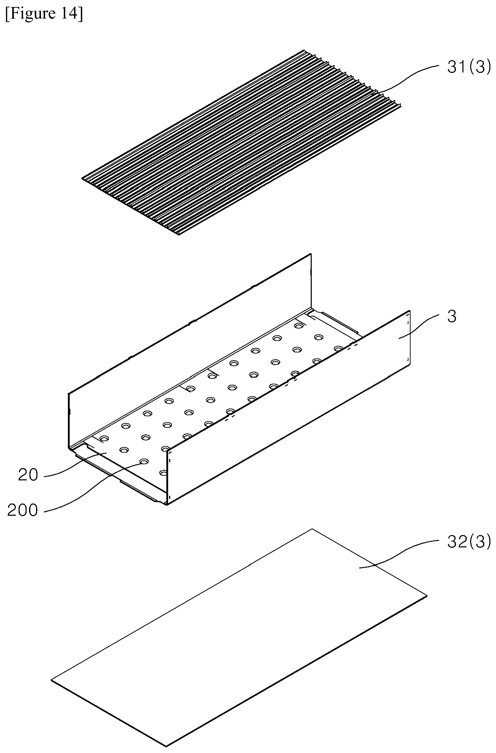

FIG. 12 illustrates a battery module placed on a pack frame along with a thermally conductive resin according to a second embodiment of the present invention, and FIGS. 13 and 14 illustrate a module frame and a thermally conductive resin layer according to the second embodiment of the present invention. Referring to FIGS. 12 to 14, the module frame 2 may include a bottom plate 20 with a thermally conductive resin 3 placed thereon.

The bottom plate 20 may be provided with a hole-shaped anchor 200 extending in upward direction from the lower surface thereof.

When the battery module M is placed on the thermally conductive resin 3 before curing and the thermally conductive resin 3 is cured after flowing into the anchor 200, the thermally conductive resin 3 forms an extension 30 having a shape of a protrusion extending in the upward direction.

Here, since the anchor 200 and the extension 30 overlap each other in the horizontal direction, the thermally conductive resin 3 and the module frame 2 may be shear-connected to each other in the horizontal direction. That is, interference in the horizontal direction between the anchor 200 and the extension 30 may limit the movement of the module frame 2 with respect to the thermally conductive resin 3, and the module frame 2 and the thermally conductive resin 3 may be structurally and mechanically fixed to each other as well as by adhesive force. Accordingly, the battery module M may be more firmly fixed to the thermally conductive resin 3 and the bottom surface of the pack frame PF on which the thermally conductive resin 3 is applied.

In addition, since the anchor 200 and the extension 30 are in contact with each other in the horizontal direction, the contact area between the module frame 2 and the thermally conductive resin 3 may increase. That is, compared to the module frame 2 having a flat lower surface, the lower surface of the module frame 2 having the anchor 200 has a large surface area, and as the thermally conductive resin 3 is partially introduced into the anchor 200 and cured, the contact area between the module frame 2 and the thermally conductive resin 3 may increase. Accordingly, the area through which heat may be conducted from the module frame 2 to the thermally conductive resin 3 increases such that the heat of the battery module M may be conducted more quickly to the thermally conductive resin 3 and the pack frame PF and dissipated.

It is preferable that a plurality of anchors 200 are provided. Accordingly, a plurality of extensions 30 may also be provided, and the plurality of extensions 30 may share the shear stress from the module frame 2.

For example, the anchor 200 may be arranged in a grid of 3 rows and 3 columns or more. Here, it is preferable that the rows and columns of the anchor 200 are arranged at equal intervals. Accordingly, each anchor 200 and each extension 30 may equally distribute stress, and the heat generated from the battery module M may be evenly dissipated to all areas.

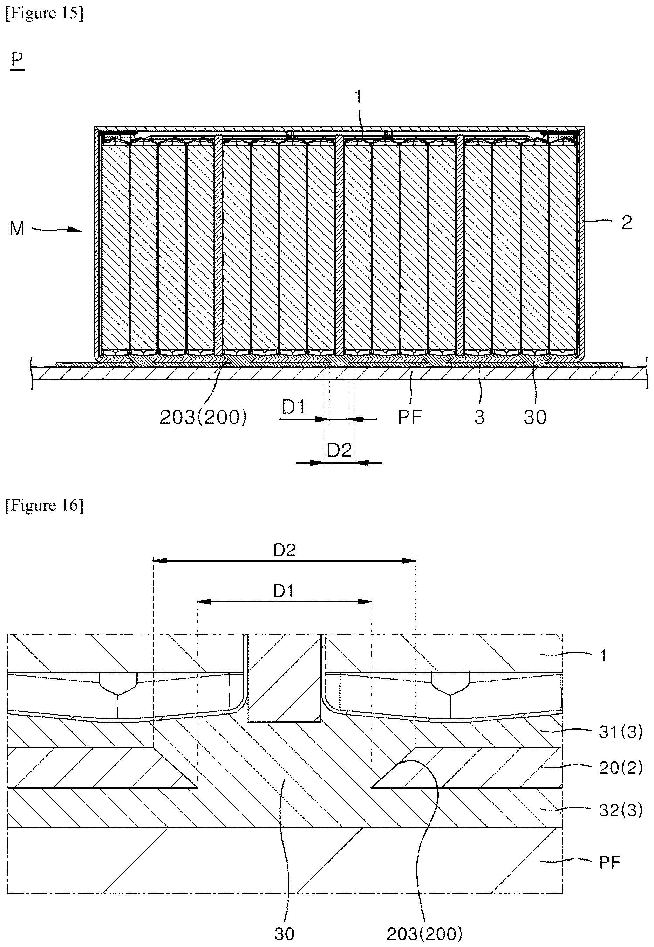

FIGS. 15 and 16 illustrate a cross-section and a main part thereof of a battery pack, respectively, according to the second embodiment of the present invention. Referring to FIGS. 15 and 16, the anchor 200 may include a tapered portion 203 having a cross-sectional area narrowing toward downward direction. The tapered portion 203 may prevent the thermally conductive resin 3 from being detached from the module frame 2 in downward direction by interfering with the extension from below.

According to an aspect of the second embodiment, the tapered portion 203 of the anchor 200 has truncated cone shape with diameters D1 and D2 of an inner circumferential surface thereof decreasing toward downward direction.

In a modified example, the anchor 200 may include a tapered portion 203 having a circular cross-section having a diameter narrowing toward downward direction.

According to another aspect of the second embodiment, the thermally conductive resin 3 includes: an upper resin layer 31 on a bottom plate 20 of a module frame 2; a lower resin layer 32 disposed under the bottom plate 20 of the module frame 2. Here, the extension may connect the upper resin layer 31 and the lower resin layer 32 through the anchor 200.

The upper resin layer 31 may prevent the entire thermally conductive resin 3 from being detached in downward direction from the bottom plate 20 of the module frame 2 by interfering with the bottom plate 20 of the module frame 2 from below.

In addition, the thermally conductive resin 3 may more effectively dissipate heat generated from the battery cell 1 mounted on the module frame 2 to the outside of the module frame 2 by connecting the upper and lower surfaces of the bottom plate 20 of the module frame 2. That is, Here, the thermally conductive resin 3 may absorb the heat generated from the battery module M very effectively and release the absorbed heat to the pack frame PF by being simultaneously in contact with the lower surface of the bottom plate 20, the upper surface of the bottom plate 20 and the lower surface of the battery cell 1 mounted on the bottom plate 20.

### [THIRD EMBODIMENT]

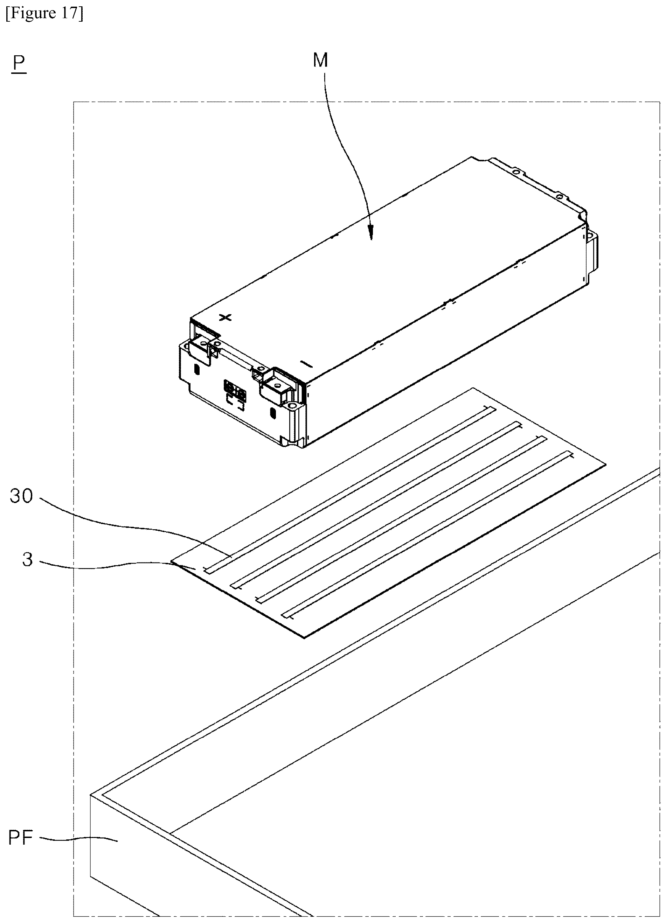

Hereinafter, with reference to FIGS. 17 to 21, the shape and bonding structure of the module frame and the thermally conductive resin according to a third embodiment of the present invention will be described in detail.

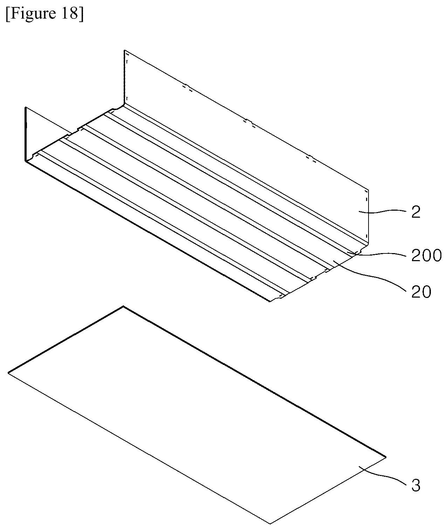

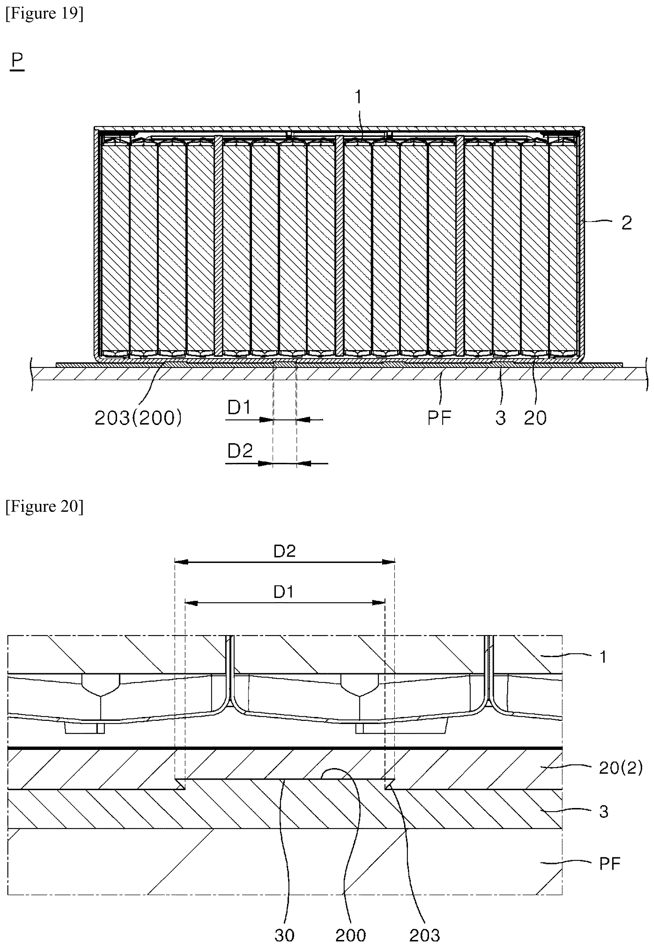

FIG. 17 illustrates a battery module according to a third embodiment of the present invention placed on a pack frame along with a thermally conductive resin, and FIGS. 18 and 19 illustrate a module frame and a thermally conductive resin layer according to the third embodiment of the present invention. Referring to FIGS. 17 to 19, the module frame 2 may include a bottom plate 20 with a thermally conductive resin 3 placed thereon.

The bottom plate 20 may be provided with a recessed anchor 200 extending in upward direction from the lower surface thereof.

When the battery module M is placed on the thermally conductive resin 3 before curing and the thermally conductive resin 3 is cured after flowing into the anchor 200, the thermally conductive resin 3 forms an extension 30 having a shape of a protrusion extending in the upward direction.

Here, since the anchor 200 and the extension 30 overlap each other in the horizontal direction, the thermally conductive resin 3 and the module frame 2 may be shear-connected to each other in the horizontal direction. That is, interference in the horizontal direction between the anchor 200 and the extension 30 may limit the movement of the module frame 2 with respect to the thermally conductive resin 3, and the module frame 2 and the thermally conductive resin 3 may be structurally and mechanically fixed to each other as well as by adhesive force. Accordingly, the battery module M may be more firmly fixed to the thermally conductive resin 3 and the bottom surface of the pack frame PF on which the thermally conductive resin 3 is applied.

In addition, since the anchor 200 and the extension 30 are in contact with each other in the horizontal direction, the contact area between the module frame 2 and the thermally conductive resin 3 may increase. That is, compared to the module frame 2 having a flat lower surface, the lower surface of the module frame 2 having the anchor 200 has a large surface area, and as the thermally conductive resin 3 is partially introduced into the anchor 200 and cured, the contact area between the module frame 2 and the thermally conductive resin 3 may increase. Accordingly, the area through which heat may be conducted from the module frame 2 to the thermally conductive resin 3 increases such that the heat of the battery module M may be conducted more quickly to the thermally conductive resin 3 and the pack frame PF and dissipated.

It is preferable that a plurality of anchors 200 are provided. Accordingly, a plurality of extensions 30 may also be provided, and the plurality of extensions 30 may share the shear stress from the module frame 2.

For example, the anchors 200 may be provided in a plurality of juxtaposed rows extending side by side. Here, the multiple rows of the anchor 200 may be arranged at equal intervals. Accordingly, each anchor 200 may evenly distribute the shear stress, and heat dissipation through the thermally conductive resin 3 may occur evenly.

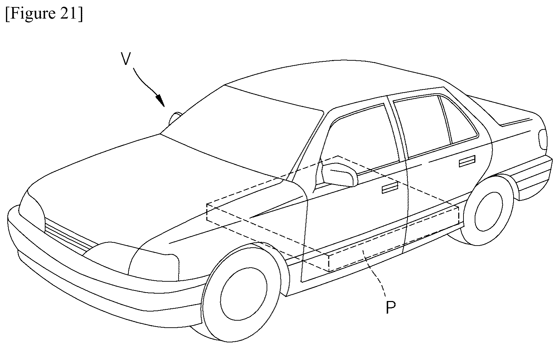

FIGS. 20 and 21 illustrate a cross-section and a main part thereof of a battery pack, respectively, according to the third embodiment of the present invention. Referring to FIGS. 20 and 21, the anchor 200 may include a tapered portion 203 having a cross-sectional area narrowing toward downward direction. The tapered portion 203 may prevent the thermally conductive resin 3 from being detached from the bottom plate 20 of the module frame 2 in upward direction by interfering with the extension 30 from below.

According to the third embodiment, the anchor 200 may include a tapered portion 203 having a rectangular cross-section with widths D1 and D2 thereof decreasing toward downward direction. More specifically, the anchor 200 may include a tapered portion 203 having a trapezoidal cross-section with the upper width thereof larger than the lower width thereof in the lengthwise direction and extending in a lengthwise direction.

In a modified example, the anchor 200 may include a first portion having a predetermined first width along a first horizontal direction, and a second portion disposed above the first portion and having a predetermined second width larger than the first width along the first horizontal direction.

That is, the anchor 200 may include the first portion and the second portion disposed above the first portion, and the cross-sectional shape of the first portion may not completely encompass the cross-sectional shape of the second portion in the plane. Accordingly, the extension 30 may interfere from below between the first portion and the second portion, and may prevent the thermally conductive resin 3 from being detached in downward direction from the bottom plate 20.

For example, the anchor 200 may include: a first portion having a rectangular cross-section of a first width and extending in lengthwise direction; and a second portion disposed under the first portion and having a rectangular cross-section of a second width greater than the first width and extending in horizontal direction.

As in the third embodiment, when the anchor 200 has a groove shape rather than a hole shape, it is very difficult to machine the anchor 200 to have an undercut shape as described above as the anchor 200 cannot be machined from the upper surface of the bottom plate 20 but must be machined from the lower surface thereof. Here, when the anchor 200 is machined to have a groove shape extending from a first horizontal surface to a second horizontal surface of the bottom plate 20, the anchor 200 may be machined from the side surface such that an undercut shape is easily formed.

### [VEHICLE WITH BATTERY PACK BUILT-IN]

Hereinafter, a structure of a vehicle according to an embodiment of the present invention will be described with reference to FIG. 22.

FIG. 22 illustrates a vehicle according to an embodiment of the present invention. Referring to FIG. 22, the battery pack P according to an embodiment of the present invention may be built into a vehicle V as a power source. The vehicle V may be a hybrid vehicle or an electric vehicle, but is not limited thereto. In addition, the vehicle V may be a two-wheeled vehicle or a four-wheeled vehicle, but is not limited thereto.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery pack comprising:
a battery module comprising a module frame;
a pack frame having a bottom plate where the battery module is placed; and
a thermally conductive resin interposed between a bottom plate of the battery module and the bottom plate of the pack frame,
wherein a hole-shaped anchor is provided in the bottom plate of the module frame, and
the thermally conductive resin comprises an extension extending in upward direction and filling the anchor.

2. The battery pack of claim 1, wherein the anchor is arranged in a grid of three or more rows and three or more columns.

3. The battery pack of claim 2, wherein the rows and columns of the anchor are arranged at equal intervals.

4. The battery pack of claim 1, wherein the anchor comprises a first portion having a first width along a first horizontal direction, and a second portion having a second width greater than the first width along the first horizontal direction and disposed above the first portion.

5. The battery pack of claim 4, wherein the first portion has a circular cross-section of a first diameter, and the second portion has a circular cross-section of a second diameter greater than the first diameter and disposed above the first portion.

6. The battery pack of claim 1, wherein the anchor comprises a tapered portion having a cross-sectional area narrowing toward downward direction.

7. The battery pack of claim 6, wherein the tapered portion has a circular cross-section having a diameter narrowing toward downward direction.

8. The battery pack of claim 7, wherein the tapered portion has an inner circumferential surface of a truncated cone shape with the diameter decreasing toward downward direction.

9. The battery pack of claim 1, wherein the thermally conductive resin comprises:
an upper resin layer disposed on the bottom plate of the module frame; and
a lower resin layer disposed under the bottom plate of the module frame,
wherein the extension connects the upper resin layer and the lower resin layer through the anchor.

10. A battery pack comprising:
a battery module comprising a module frame;
a pack frame having a bottom plate where the battery module is placed; and
a thermally conductive resin interposed between a bottom plate of the battery module and the bottom plate of the pack frame,
wherein a groove-shaped anchor is provided in the bottom plate of the module frame, and
the thermally conductive resin comprises an extension extending in upward direction and filling the anchor.

11. The battery pack of claim 10, wherein the anchor is provided in a plurality of juxtaposed rows extending side by side.

12. The battery pack of claim 11, wherein the rows the anchor are arranged at equal intervals.

13. The battery pack of claim 10, wherein the anchor comprises a first portion having a first width along a first horizontal direction, and a second portion having a second width greater than the first width along the first horizontal direction and disposed above the first portion.

14. The battery pack of claim 13, wherein the anchor comprises a first portion having a rectangular cross-section of a predetermined first width and extending in lengthwise direction, and a second portion having a rectangular cross-section of a predetermined second width greater than the first width, the second portion extending in lengthwise direction and disposed under the first portion.

15. The battery pack of claim 10, wherein the anchor comprises a tapered portion having a cross-sectional area narrowing toward downward direction.

16. The battery pack of claim 15, wherein the tapered portion has a rectangular cross-section having a width narrowing toward downward direction.

17. The battery pack of claim 16, wherein the tapered portion has a trapezoidal cross-section extending in lengthwise direction and having an upper width greater than a lower width in lengthwise direction.

18. A vehicle comprising a battery pack according to any one of claims 1 to 17.
